# EUROPEAN PATENT APPLICATION

(11) **EP 1 156 600 A1**
(43) Date of publication of application: **21.11.2001**
(21) Application number: 00981832.9
(22) Date of filing: 19.12.2000
(51) Int. Cl.: H04B 7/26

(54) **CDMA TERMINAL AND CDMA METHOD**

(30) Priority: 24.12.1999 JP 36630999
(71) Applicant: MATSUSHITA ELECTRIC INDUSTRIAL CO., LTD., Kadoma-shi, Osaka 571-8501 (JP)
(72) Inventor: WATANABE, Masatoshi, Konan-ku, Yokohama-shi, Kanagawa 233-000 (JP)
(74) Representative: Grünecker, Kinkeldey, Stockmair & Schwanhäusser Anwaltssozietät
(86) International application number: JP0009001
(87) International publication number: WO0148951

(57) **Abstract**

A data reception power measuring device 108 measures reception power of a data section. A TPC bit reception power measuring device 109 measures reception power of a forward TPC bit section. A pilot channel reception power measuring device 110 measures reception power of a pilot channel. A reception power measuring device 111 measures reception power where an amount corresponding to variation in transmission power is corrected by use of output signals from the data reception power measuring device 108, TPC bit reception power measuring device 109 and pilot channel reception power measuring device 110. A TPC bit generator 112 compares reception power output from the reception power measuring device 111 with a threshold, which is preset to satisfy a desired quality, whereby generating a reverse TPC bit, which instructs a base station to increase/decrease transmission power. This makes it possible to perform high accurate measurement of reception power with respect to the signal where transmission power varies according to the variable rate, and to carry out transmission power control appropriately based on the measurement result.

## Description

### Technical Field

The present invention relates to a CDMA communication terminal apparatus and a CDMA communication method, which are used in a cellular system such as a digital car phone, a digital cellular phone, and the like.

### Background Art

A CDMA (Code Division Multiple Access) is a system for spreading information to a sufficiently wide band as compared with a minimum band width at the time of transmitting information. Moreover, CDMA is a communication system having excellent privacy, concealment, SIR (Signal to Interference Ratio), and is capable of increasing spectrum efficiency highly, and accommodating numerous users as compared with FDMA (Frequency Division Multiple Access) and TDMA (Time Division Multiple Access).

In CDMA, however, there is a near-far problem, specifically, in the case where a desired station is located at a far place and an undesired station (interference station) is located at a near place, reception power of a signal transmitted from the interference station is more increased than reception power of a signal transmitted from the desired station. This makes it impossible to suppress cross-correlation between spread codes by only a processing gain (spread gain) to make it impossible to perform communications.

Hence, a cellular system using CDMA needs transmission power control according to a state of each transmission channel in a reverse link, which is from a mobile station to a base station. Moreover, a method for making compensation for variation in a momentary value of reception power by controlling transmission power can be considered as measures against fading, which is a cause of deteriorating channel quality in a terrestrial mobile communication.

Patent Publication No. HEI 4-502841 describes one example of a transmission power control method in a cellular system using CDMA.

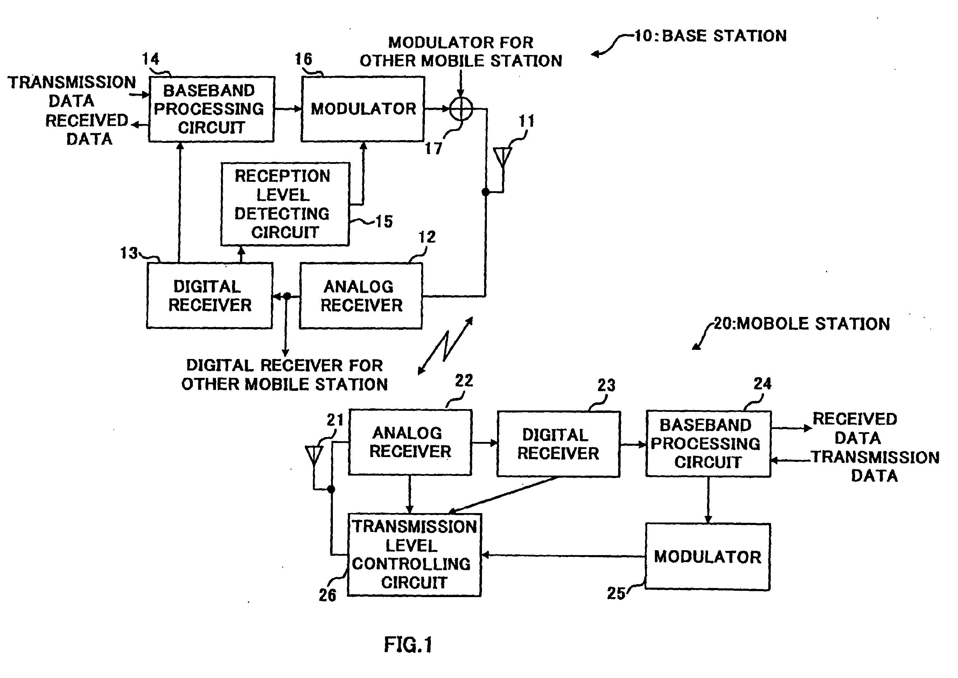

FIG. 1 is a block diagram illustrating the configurations of a base station 10 and a mobile station 20 in a conventional CDMA communication system described in the above publication. Normally, in the CDMA communication system, radio communications are performed between a plurality of mobile stations 20 and one base station 10.

The following will explain the function of each component of the base station 10. An analog receiver 12 provides processing such as amplification, frequency conversion, and the like to a multiple signal, which is received by an antenna 11 and which is sent from the plurality of mobile stations 20, and the analog receiver 12 supplies the resultant to a digital receiver 13 for each mobile station 20.

The digital receiver 13 detects correlation using a spread code employed in the mobile station 20 that performs reception, whereby separating the signal of the mobile station 20 from the received signals multiplied, and supplies the separated signal to a baseband processing circuit 14 and a reception power detecting circuit 15.

The baseband processing circuit 14 obtains reception data from the separated signal, and supplies transmission data to the mobile station 20, serving as a transmission signal, to a modulator 16.

The reception power detecting circuit 15 measures the level of the signal received from the mobile station 20 and generates a transmission power control (hereinafter referred to as "TPC") bit, and supplies the generated TPC bit to the modulator 16. This TPC bit is used to control transmission power of the mobile station 20.

The modulator 16 multiplies the transmission signal from the baseband processing circuit 14 and the TPC bit from the reception power detecting circuit 15 by a spread code assigned to the mobile station 20, and outputs the resultant to an adder 17.

The adder 17 multiplexes a spread signal outputted from the modulator 16 for the plurality of mobile stations 20. The signal multiplexed by the adder 17 is subjected to processing such as FR (Radio Frequency) conversion, amplification, and the like, and the resultant signal is transmitted as a radio signal.

The following will explain the function of each component of the base station 10. An analog receiver 22 provides processing such as amplification, frequency conversion, and the like to a multiple signal, which is received by an antenna 21 and which is sent from the base station 10, and the analog receiver 22 supplies the resultant to a digital receiver 23. Moreover, the analog receiver 22 has a measuring circuit of an integrated power level of the received signal, and supplies the measured power level to a transmission level control circuit 26.

The digital receiver 23 separates a signal addressed to the digital receiver 23 from the spread and multiplexed signal by use of correction detection, and the digital receiver 23 supplies the resultant to a baseband processing circuit 24. Moreover, the digital receiver 23 extracts a TPC bit from the separated signal, and supplies the extracted TPC bit to the transmission level control circuit 26.

The baseband processing circuit 24 obtains received data from the separated signal. Concurrently, the baseband processing circuit 24 supplies transmission signal to the base station 10, serving as a transmission signal, to a modulator 25.

The modulator 25 spreads the transmission signal from the baseband processing circuit 24 using an assigned spread code, and supplies the resultant to a transmission level control circuit 26.

The transmission level control circuit 26 controls transmission power of the spread signal using the integrated power level from the analog receiver 22 and the TPC bit extracted from the received signal. An output signal of the transmission level control circuit 26 is subjected to RF conversion, amplification, and the like and transmitted as a radio signal from the antenna 21.

In the transmission power control method in the aforementioned CDMA communication system, first, the transmission power level is controlled using the integrated power level measured at the analog receiver 22 of the mobile station 20, and this compensates for variation in a central value of reception power of the base station, which is caused by a change in a distance between the base station 10 and the moved mobile station 20. This method is referred to as transmission power control method due to an open loop.

Moreover, in order to increase the transmission level of the mobile station 20 when reception power, which is measured by the reception power detecting circuit 15 of the base station 10 and which is sent from the mobile station 20, is lower than a preset reference level, and to decrease the transmission level of the mobiles station 20 when reception power is higher than the reference level, the TPC bit is determined and transmitted to the mobile station 20.

The mobile station 20 controls the transmission level using the TPC bit extracted by the digital receiver 23 at a period of about 1.25 ms at high speed, and this compensates for variation in a momentary value up to about several tens of Hz due to fading in a reverse link, which is from the mobile station 20 to the base station 10, and different fading in a forward link vice versa. This method is referred to as transmission power control method due to a closed loop.

As mentioned above, according to CDMA, there is used the transmission power control method due to the open loop and the closed loop in the reverse link.

Additionally, the closed loop transmission power control in the reverse link is performed using SIR (Desired signal to Interference signal Ratio) at the base station, making it possible to improve spectrum efficiency as compared with the case using reception power.

While, in the forward link, this is no near-far problem occurs unlike the reverse link. However, the closed loop transmission power control is applied to the forward link, making it possible to compensate for variation in the momentary value of reception power due to fading and to improve the channel quality.

Herein, in speech communication, there is sometimes used a variable rate speech coding system that changes transmission speech data rate according to the state of the voice/unvoice sound and reduces transmission power per user on average in order to increase the number of accommodation channels.

In the case where the variable rate speech coding system is used in the forward link of CDMA communication system, transmission power of a data section is changed depending on the rate. However, transmission power of TPC bit is made constant in order to maintain the quality of TPC bit constant at the mobile station 20.

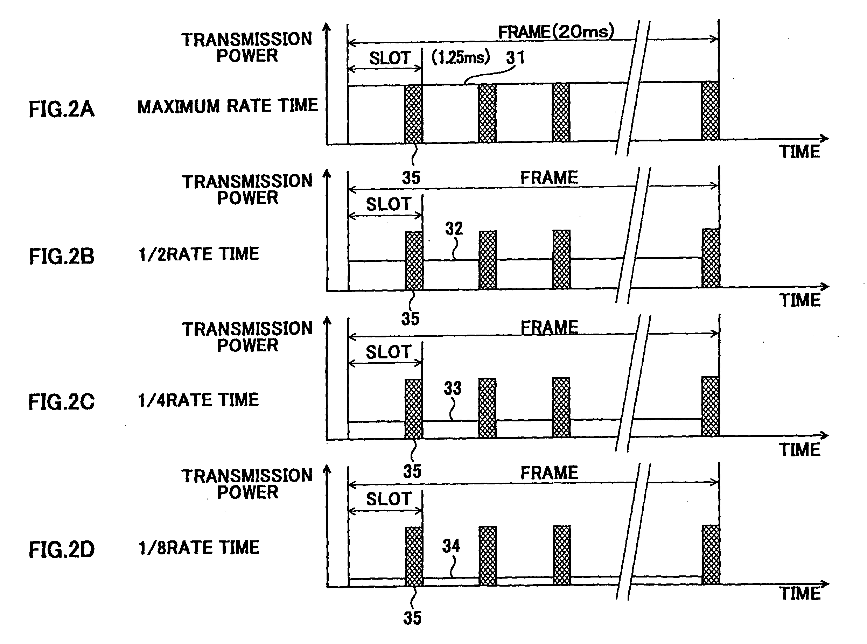

FIG. 2A to FIG. 2D are transmission signal power views in the variable rate speech coding system.

As illustrated in FIG. 2A to FIG. 2D, speech coding data (transmission data) 31 to 34 is frame-configured in unit of about 20 ms, and the rate is changed on a frame-by-frame basis in accordance with the presence or absence of the sound. Then, transmission power is also changed in accordance with the rate that changes in order of maximum rate (FIG. 2A), 1/2 rate (FIG. 2B), 1/4 rate (FIG. 2C), and 1/8 rate (FIG. 2D), and this makes it possible to reduce interference with other user. Additionally, even if transmission power is reduced when the rate is low, transmission power per information bit is maintained, so that no deterioration of quality occurs. On the other hand, a TPC bit 35 is periodically inserted and transmission power is unchanged even if the rate is changed.

According to the conventional apparatus, in the case where closed loop transmission power control is applied to compensate for fading in the forward link, reception power of the forward link or SIR must be measured at a fixed period with a slow delay at the mobile station 20.

However, in the case where transmission power is changed in accordance with the change in the rate in the forward link, there is a problem in which the mobile station 20 cannot determine whether the change in measured reception power is caused by propagation loss of radio propagation path or the change in the rate.

On the other hand, transmission power of TPC bit is fixed regardless of the rate, and propagation loss can be theoretically estimated based on reception power of TPC bit. However, since TPC bit is transmitted at a rate of only one bit per one slot (1.25 ms), there is a limitation in the estimation of accuracy of propagation loss, which is based on reception power of TPC bit. This causes a problem in which appropriate control cannot be carried out even if transmission power control is performed according to the estimation result.

### Disclosure of Invention

It is an object of the present invention is to provide a CDMA communication terminal apparatus, which is capable of measuring reception power with respect to a signal where transmission power changes according to a variable rate and which is capable of performing transmission power control appropriately based on the measurement result, and a CDMA communication method.

The above object can be attained by adding an amount, corresponding to variation in reception power of a pilot channel, to reception power of a previous slot where an amount corresponding to variation in transmission power is corrected to obtain reception power.

### Brief Description of Drawings

FIG. 1 is a block diagram illustrating the configuration of a conventional CDMA communication system;
FIG. 2A is a conceptual view of variable rate transmission in the conventional CDMA communication system;
FIG. 2B is a conceptual view of variable rate transmission in the conventional CDMA communication system;
FIG. 2C is a conceptual view of variable rate transmission in the conventional CDMA communication system;
FIG. 2D is a conceptual view of variable rate transmission in the conventional CDMA communication system;
FIG. 3 is a block diagram illustrating the configuration of a mobile station in a CDMA communication system according to the first embodiment of the present invention;
FIG. 4A is a conceptual view of a reception power measuring method at the mobile station in the CDMA communication system according to the first embodiment of the present invention;
FIG. 4B is a conceptual view of a reception power measuring method at the mobile station in the CDMA communication system according to the first embodiment of the present invention;
FIG. 5 is a block diagram illustrating the configuration of a mobile station in a CDMA communication system according to the second embodiment of the present invention; and
FIG. 6 is a block diagram illustrating the configuration of a mobile station in a CDMA communication system according to the third embodiment of the present invention.

### Best Mode for Carrying Out the Invention

Generally, a cellular system using CDMA adopts a method in which all mobile stations, which transmit an unmodulated pilot channel and perform communication with the base station in the forward link from the base station to the mobile station, estimate a channel for receiving the pilot channel to demodulate data, and capture timing synchronization of spread code, and hold it.

Transmission power of the pilot channel is fixed. Moreover, since the pilot channel and the TPC bit pass through the same propagation path, their variations are equal to each other.

Then, the TPC bit is transmitted at a rate of only one bit per one slot, while the pilot channel is transmitted with fixed power over the entirety of the slots.

The present invention focuses attention on the above point.

The following will specifically explain the embodiments of the present invention with reference to the drawings accompanying herewith.

### (Embodiment 1)

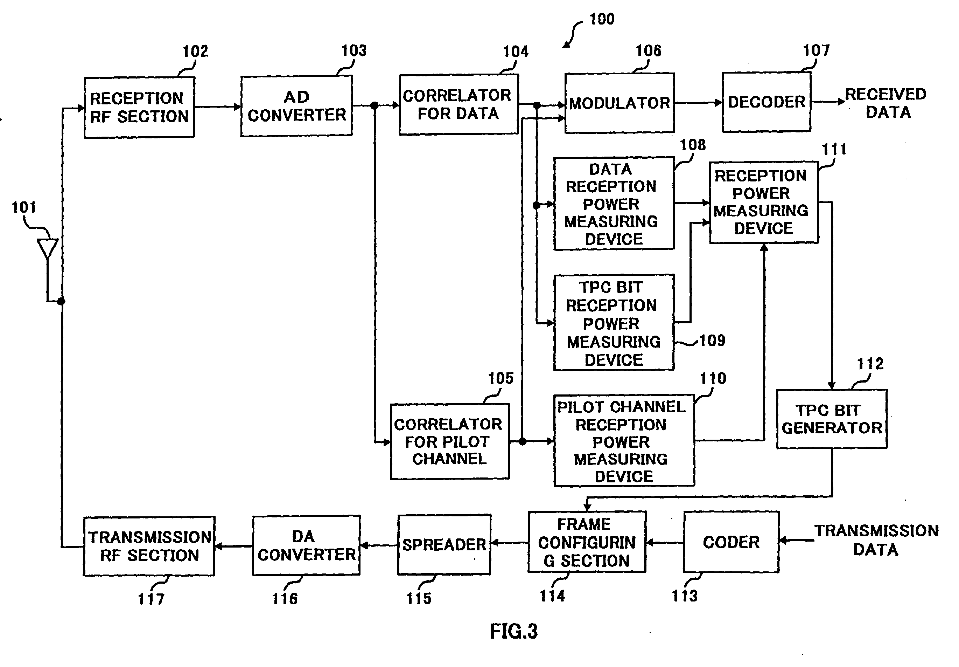

FIG. 3 is a block diagram illustrating the configuration of the CDMA communication terminal apparatus according to Embodiment 1 of the present invention. The following will explain the function of each of components of a CDMA communication terminal apparatus 100.

An antenna 101 receives a radio signal transmitted from a base station, which is a communication partner, and transmits a signal outputted from a transmission RF section 117 as a radio signal.

A reception RF section 102 performs frequency conversion and amplification to the signal received by the antenna 101. An AD converter 103 converts the analog signal outputted from the reception RF section 102 to a digital signal.

A data correlator 104 despreads the output signal of the AD converter 103 using the same spread code for data multiplied at the base station, and outputs the resultant to a data reception power measuring device 108 and a TPC bit reception power measuring device 109.

A pilot channel correlator 105 despreads the output signal of the AD converter 103 using a spread code for a pilot channel, and outputs the resultant to a demodulator 106 and a pilot channel reception power measuring device 110.

The demodulator 106 provides processing such as demodulation and multipath combining and the like to the output signal of the data correlator 104 based on the output signal of the pilot channel correlator 105, and outputs the resultant to a decoder 107. The decoder 107 decodes an input signal from the demodulator 106 to obtain received data.

The data reception power measuring device 108 measures reception power of a data section of the signal outputted from the data correlator 104, and outputs the resultant to a reception power measuring device 111. The TPC bit reception power measuring device 109 measures reception power of a forward TPC bit section of the signal outputted from the data correlator 104, and outputs the resultant to the reception power measuring device 111. The pilot channel reception power measuring device 110 measures reception power of the pilot channel outputted from the data correlator 105, and outputs the resultant to the reception power measuring device 111.

The reception power measuring device 111 measures reception power where an amount corresponding to variation in transmission power is corrected (hereinafter referred as "corrected reception power) using the output signals from the data reception power measuring device 108, the TPC bit reception power measuring device 109, and the pilot channel reception power measuring device 110, and outputs the resultant to a TPC bit generator 112. A detailed explanation of a reception power measuring operation at the reception power measuring device 111 will be given later.

The TPC bit generator 112 compares reception power outputted from the reception power measuring device 111 with a threshold value, which is preset to satisfy a desired quality, and generates a reverse TPC bit, which instructs the base station to increase/decrease transmission power. Then, the TPC bit generator 112 outputs the resultant to a frame configuring section 114.

A coder 113 provides processing such as an error correction coding and the like to transmission data that is transmitted to the base station, and outputs the resultant to the frame configuring section 114. The frame configuring section 114 multiplexes the output signal of the coder 113 and that of the TPC bit generator 112, and outputs the resultant to a spreader 115 as transmission frame data. The spreader 115 provides spread processing to transmission frame data outputted from the frame configuring section 114, and outputs the resultant to a DA converter 116. The DA converter 116 coverts the digital signal subjected to spread processing by the spreader 115 to an analog signal, and outputs the resultant to a transmission RF section 117. The transmission RF section 117 provides frequency conversion and amplification processing to the analog signal outputted from the DA converter 116, and outputs the resultant to an antenna 101.

An explanation will be next given of the operation of the CDMA communication terminal apparatus 100 having the above configuration.

The signal, which is transmitted from the base station and which is received by the antenna 101, is subjected to frequency conversion and amplification at the reception RF section 102. Thereafter, the resultant is converted to a digital signal (data) at the AD converter 103, and the resultant is outputted to the data correlator 104 and the pilot channel correlator 105.

The data correlator 104 performs despreading by use of the same spread code for data multiplied at the base station, and outputs the resultant to the demodulator 106, the data reception power measuring device 108, and the TPC bit reception power measuring device 109.

The pilot channel correlator 105 despreads the received signal subjected to AD conversion using the spread code for a pilot signal, and outputs the resultant to the demodulator 106 and the pilot channel reception power measuring device 110.

The demodulator 106 provides processing such as demodulation and multipath combining to data outputted from the data correlator 104 based on the output timing of the pilot channel correlator 105. Thereafter, the demodulator 106 outputs the resultant to the demodulator 107. The demodulator 107 decodes data outputted from the demodulator 106, whereby outputting received data.

The data reception power measuring device 108 measures reception power of the data section of the signal outputted from the data correlator 104, and outputs the resultant to the reception power measuring section 111. The pilot channel reception power measuring device 110 measures reception power of the pilot channel outputted from the data correlator 105, and outputs the resultant to the reception power measuring device 111.

The reception power measuring device 111 obtains corrected reception power based on reception power of the TPC bit section, reception power of the data section, and reception power of the pilot channel, and outputs the resultant to the TPC bit generator 112.

The TPC bit generator 112 compares reception power output therefrom with a threshold value, which is preset to satisfy a desired quality, and generates a reverse TPC bit, which instructs the base station to increase/decrease transmission power. The TPC bit generator 112 outputs the resultant to the frame configuring section 114.

The coder 113 provides processing such as an error correction coding and the like to transmission data that is transmitted to the base station, and outputs the resultant to the frame configuring section 114. The frame configuring section 114 multiplexes the output signal of the coder 113 and that of the TPC bit generator 112, and outputs the resultant to the spreader 115 as transmission frame data. This transmission frame data is subjected to spread processing at the spreader 115, the resultant is converted to an analog signal at the DA converter 116, and the analog signal is subjected to frequency conversion and amplification at the transmission RF section 117. Then, the resultant is transmitted to the base station from the antenna 101 as a radio signal.

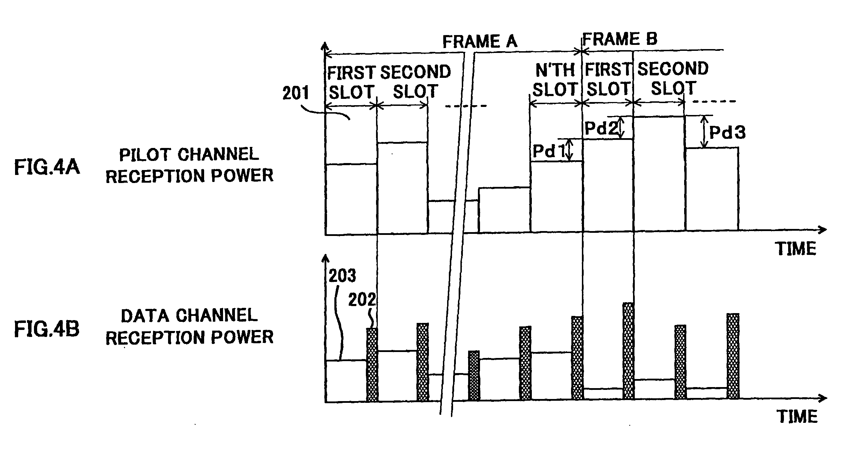

An explanation will be next given of the reception power measuring operation at the reception power measuring device 111 of the CDMA communication terminal apparatus 100 with reference to FIG. 4A and FIG. 4B.

FIG. 4A is a view of received signal power in which reception power of a pilot channel 201 outputted from the pilot channel reception power measuring device 110 is illustrated with a lapse of time. FIG. 4B is a view of received signal power in which reception power of data 202 outputted from the data reception power measuring device 108 and that of a TPC bit 203 outputted from the TPC bit reception power measuring device 109 are illustrated with a lapse of time. Additionally, in FIG.4A and FIG. 4B, one frame is composed of n slots (n is a natural number of 2 or more) and reception power of the pilot channel 201 and that of data 202 are averaged over frame intervals.

The reception power measuring device 111 first averages reception power of data 202 and the TPC bit 203 over a frame interval whose rate is unchanged. Moreover, the reception power measuring device 111 compares the average value of reception power of data 202 with that of reception power of the TPC bit 203, and determines the rate of this frame. Data 202 and TPC bit 203 are averaged over the frame interval, whereby making it possible to obtain determination accuracy higher than the determining method at only the slot intervals.

For example, in the case of frame A illustrated in FIG. 4A and FIG.4B, since the average value of reception power of data 202 is about 1/2 of that of reception power of TPC bit 203, the rate is can be determined as 1/2.

Then, the reception power measuring device 111 multiplies the average value of reception power of the data section by the reciprocal number of the determined rate, and converts it to average reception power P₀ of frame A at a maximum rate conversion time. This makes it possible to correct the amount corresponding to variation in the rate of transmission power.

Moreover, the reception power measuring device 111 adds a difference in the reception power of the pilot channel to the corrected reception power of the previous slot to obtain reception power of a desired slot.

For example, in FIG. 4, it is assumed that a difference between the reception power of the pilot channel in the first slot of the frame B and that of the pilot channel in nth slot of the frame B is Pd₁. The reception power measuring device 111 obtains reception power Pd₁ in the first slot of the frame B as an added value of P₀ and Pd₁.

Sequentially, if average power in a difference between the average power of (i+1)th slot and the average power of ith slot, which is the difference between the slots in the average reception power of the pilot signal, is set to Pᵢ₊₁, the reception power measuring device 111 obtains reception power Pᵢ₊₁ of (i+1)th slot as an added value of reception power P₁ and Pᵢ₊₁ (i is a natural number of n-1 and less).

Thus, the pilot channel is transmitted with a fixed power over the entirety of slot intervals and the variation in the pilot channel is equal to the data section and the TPC bit. Hence, the difference in reception power of the pilot channel is added to the corrected reception power of the previous slot to obtain reception power of a desired slot, making it possible to obtain a measurement value with high accuracy. Transmission power control can be appropriately performed based on the measurement result.

### (Embodiment 2)

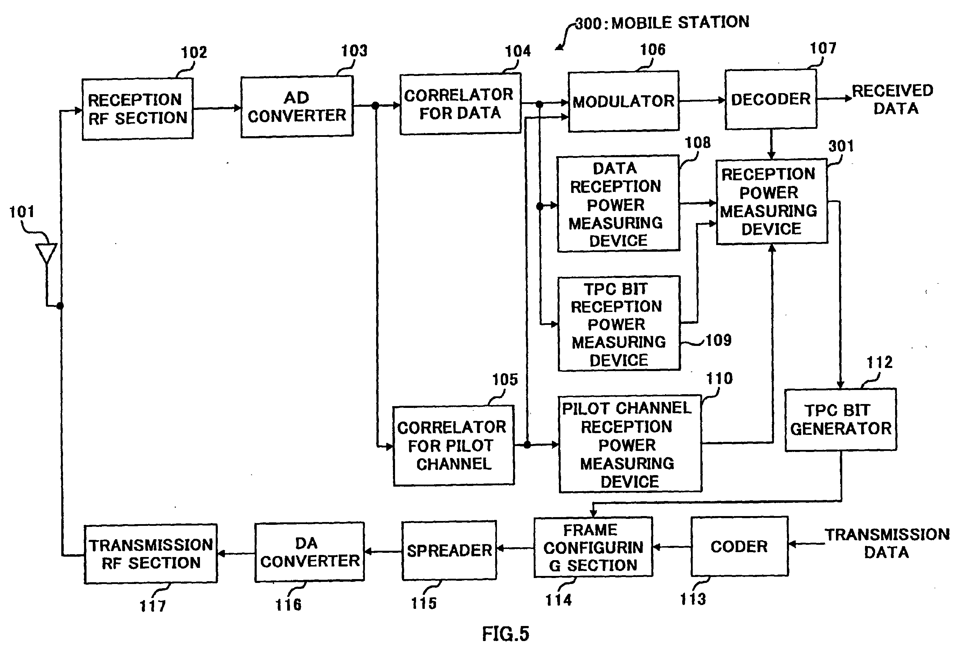

FIG. 5 is a block diagram illustrating the configuration of the CDMA communication terminal apparatus according to Embodiment 2 of the present invention. Additionally, in a CDMA communication terminal apparatus 300 illustrated in FIG. 5, the same reference numerals as those of FIG. 3 are added to the configuration parts common to the CDMA communication terminal apparatus 100 illustrated in FIG. 3, and the explanation is omitted.

The CDMA communication terminal apparatus 300 illustrated in FIG. 5 is different from the CDMA communication terminal apparatus 100 of Embodiment 1 in the point that a reception power measuring device 301 corrects the amount corresponding to variation in transmission power by use of the rate determined by the decoder 107.

In such a configuration, the decoder 107 must determine the rate of received data at a decoding time, and there is used a method for determining the rate by use of error detection processing such as a CRC (Cyclic Redundancy Check) and the like after decoding on the assumption of all rates.

Accordingly, the use of the reception signal rate determined by the decoder 107 at the time of measuring reception power makes it possible for the reception power measuring device 301 to determine the rate at high accuracy as compared with the case explained in Embodiment 1 in which the rate is determined using the comparison between the frame average reception power of the data section and that of the TPC bit.

In this way, the reception power measuring device 301 corrects the amount corresponding to the variation in transmission power using the rate determined by the decoder 107, whereby reception power can be measured with high accuracy and transmission power control can be appropriately performed based on the measurement result.

### (Embodiment 3)

In Embodiments 1 and 2, the difference in the average reception power between slots of the pilot channel is added to the average corrected reception power of the frame. However, transmission power of the actual data channel is varied by control, which is based on the reverse TPC bit transmitted from the CDMA communication terminal apparatus 400. Hence, the difference between transmission power of the actual data channel and the pilot channel transmitted with a fixed power is generated by only the amount corresponding to variation due to control. Embodiment 3 explains the case in which this problem is solved so that reception power is measured with higher accuracy.

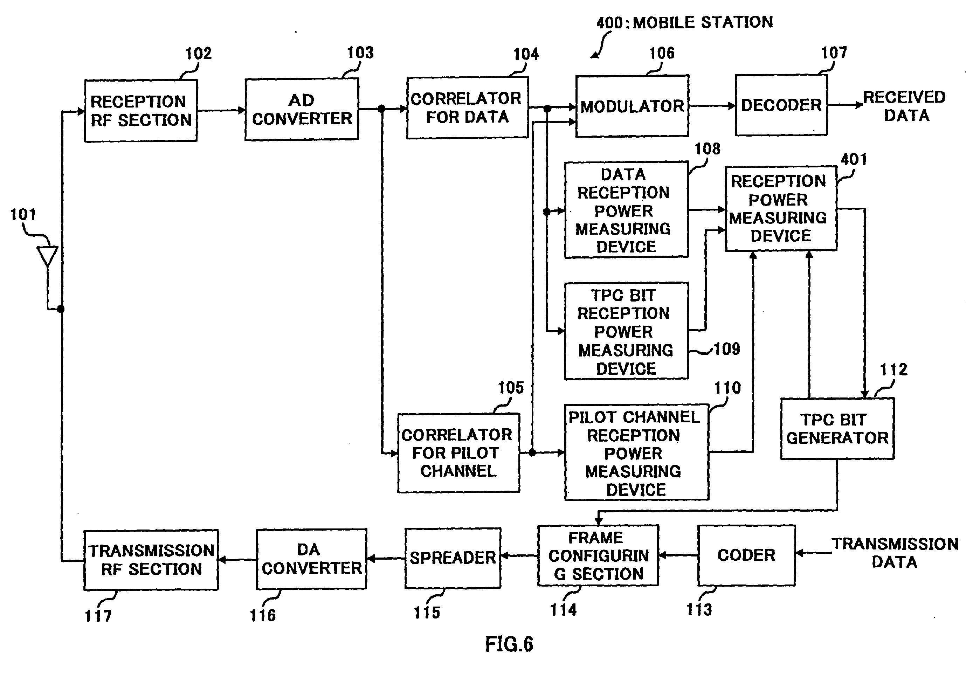

FIG. 6 is a block diagram illustrating the configuration of the CDMA communication terminal apparatus according to Embodiment 3 of the present invention. Additionally, in a CDMA communication terminal apparatus 400 illustrated in FIG. 5, the same reference numerals as those of FIG. 3 are added to the configuration parts common to the CDMA communication terminal apparatus 100 illustrated in FIG. 3, and the explanation is omitted.

The CDMA communication terminal apparatus 400 illustrated in FIG. 6 is different from the CDMA communication terminal apparatus 100 of Embodiment 1 in the point that a reception power measuring device 401 performs measurement of reception power by use of the reverse TPC bit generated by the TPC bit generator 112.

The amount corresponding to variation in transmission power of the base station can be estimated based on the reverse TPC bit transmitted from the CDMA communication terminal apparatus 400.

Namely, the TPC bit generator 112 generates the reverse TPC bit, which instructs the base station to increase/decrease transmission power, and outputs the resultant to the frame configuring section 114 and the reception power measuring device 401.

The reception power measuring device 401 adds the difference in the average reception power between slots of the pilot channel to the average corrected reception power of the frame. The reception power measuring device 401 further adds the amount corresponding to variation in transmission power of the base station due to the reverse TPC bit thereto, whereby measuring reception power.

Thus, at the time of measuring reception power, consideration is given to the amount corresponding to variation in transmission power of the base station due to the reverse TPC bit, whereby compensating for the difference between the data channel and the pilot channel in transmission power, and this makes it possible to measure reception power with higher accuracy.

Though the aforementioned embodiments have explained the case in which comparison between measured reception power and the threshold value is performed to generate the reverse TPC bit, the present invention is not limited to this. SIR is measured and comparison between SIR and the threshold value is performed so that the reverse TPC bit may be generated.

As is obvious from the above explanation, according to the present invention, high accurate measurement of reception power can be made with respect to the signal where transmission power varies according to the variable rate, and transmission power control can be appropriately performed based on the measurement result.

This application is based on the Japanese Patent Application No. HEI 11-366309 filed on December 24, 1999, entire content of which is expressly incorporated by reference herein.

### Industrial Applicability

The present invention is suitable for use in a cellular system such as a digital car phone, a digital cellular phone, and the like.

## Claims

1. A CDMA communication terminal apparatus comprising:
first measuring means for measuring reception power of variable rate data where transmission power varies according to a transmission rate and the content of a reverse transmission power control bit;
second measuring means for measuring reception power of an unmodulated pilot channel transmitted with a fixed power; and
reception power measuring means for measuring desired signal reception power using said variable rate data where an amount corresponding to variation in transmission power is corrected and said reception power of the pilot channel.

2. The CDMA communication terminal apparatus according to claim 1, further comprising third measuring means for measuring reception power of a reverse transmission power control bit whose transmission power varies according to the content of the reverse transmission power control bit, wherein said reception power measuring means compares average reception power of said reverse transmission power control bit at an interval whose rate is fixed with average reception power of the variable rate data to determine a rate of said variable rate data, and corrects the amount corresponding to variation in transmission power of said variable data using the determined rate.

3. The CDMA communication terminal apparatus according to claim 1, wherein said reception power measuring means corrects the amount corresponding to variation in transmission power of the variable rate using a rate determined by error detection processing.

4. The CDMA communication terminal apparatus according to claim 1, wherein said reception power measuring means adds the amount corresponding to variation in average reception power between the slots of the pilot channel to reception power of the variable rate data where an amount corresponding to variation in transmission power is corrected, whereby measuring desired signal reception power.

5. The CDMA communication terminal apparatus according to claim 1, wherein said reception power measuring means adds the amount corresponding to variation in average reception power between the slots of the pilot channel and an amount corresponding to variation in transmission power of an apparatus of a transmitting side using the reverse control bit to reception power of the variable rate data where an amount corresponding to variation in transmission power is corrected, whereby measuring desired signal reception power.

6. The CDMA communication terminal apparatus according to claim 1, further comprising generating means for comparing the desired signal reception power measured by said reception power measuring means with a determined threshold value to generate a reverse transmission power bit, which instructs an apparatus of a transmitting side to increase/decrease transmission power according to the comparison result.

7. The CDMA communication terminal apparatus according to claim 1, said reception power measuring means comprises generating means for comparing a ratio between desired wave reception power and interference signal reception power with a predetermined threshold value to generate a reverse transmission power bit, which instructs an apparatus of a transmitting side to increase/decrease transmission power according to the comparison result.

8. A CDMA communication method wherein a base station apparatus, which performs radio communication with a communication terminal apparatus by CDMA, transmits an unmodulated pilot channel with fixed power, and variable rate data where transmission power varies according to a transmission rate and a content of a reverse transmission power control bit by use of data channel addressed to said communication terminal apparatus, and said communication terminal apparatus measures desired signal reception power by adding an amount corresponding to variation in reception power in said pilot channel to reception power of said variable rate data after correcting the amount corresponding to variation in transmission power, and determines a reverse transmission power control bit, which controls transmission power of said base station apparatus according to the relationship between said desired signal reception power and a predetermined threshold value in a value of large or small, and transmits said determined reverse transmission power control bit.

9. The CDMA communication method according to claim 8, wherein the base station apparatus multiplexes a forward transmission power control bit where transmission power varies according to the content of a reverse transmission power control bit into variable rate data in a time division manner and transmits the variable rate data, and the communication terminal apparatus determines a transmission rate by comparing average reception power of said variable rate data at an interval whose rate is fixed with average reception power of the said forward transmission power control bit, and corrects an amount corresponding to variation in transmission power based on the determination result.

10. The CDMA communication method according to claim 8, wherein the base station apparatus adds an error detection coding signal to transmission data and the communication terminal apparatus determines a rate using said error detection code, and corrects an amount corresponding to variation in transmission power based on the determination result.

11. The CDMA communication method according to claim 8, wherein the communication terminal apparatus determines the reverse transmission power control bit using a value obtained by adding an amount corresponding to variation in transmission power of the base station to the desired signal reception power measured.
